(19) Europäisches Patentamt / European Patent Office / Office européen des brevets

(11) **EP 4 273 740 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **23169102.3**

(22) Anmeldetag: **21.04.2023**

(51) Internationale Patentklassifikation (IPC):
*G06K 7/10* (2006.01)     *H01M 10/613* (2014.01)
*H01M 10/6556* (2014.01)     *H01M 50/209* (2021.01)
*H01M 50/289* (2021.01)     *H01M 10/6568* (2014.01)

(52) Gemeinsame Patentklassifikation (CPC):
**H01M 50/209; G06K 7/10465; G06K 7/10722;**
**H01M 10/613; H01M 10/6556; H01M 10/6568;**
**H01M 50/289;** H01M 2220/20; Y02E 60/10

(54) **OPTISCHE BILDERFASSUNGSEINHEIT UND VERFAHREN ZUM BESTIMMEN EINER GRÖSSENRESERVE**

OPTICAL IMAGE RECORDING UNIT AND METHOD FOR DETERMINING A SIZE RESERVE

UNITÉ DE CAPTURE D'IMAGE OPTIQUE ET PROCÉDÉ DE DÉTERMINATION D'UNE RÉSERVE DE TAILLE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **02.05.2022 DE 102022000147**

(43) Veröffentlichungstag der Anmeldung:
**08.11.2023 Patentblatt 2023/45**

(73) Patentinhaber: **Baumer Optronic GmbH**
**01454 Radeberg (DE)**

(72) Erfinder:
• **Steinicke, Michael**
**01307 Dresden (DE)**
• **Siegel, Sebastian**
**01309 Dresden (DE)**

(74) Vertreter: **Strauss, Steffen**
**Baumer Innotec AG**
**Group Intellectual Property**
**Hummelstrasse 17**
**8501 Frauenfeld (CH)**

(56) Entgegenhaltungen:
**EP-A1- 3 789 906**

**Beschreibung**

Die vorliegende Erfindung betrifft eine optische Bilderfassungseinheit zum Erfassen eines Codes und ein Verfahren zum Bestimmen einer Größenreserve zur minimalen Auflösungsgrenze eines in einem Bildsignal enthaltenen Codes.

Aus dem Stand der Technik sind optische Bilderfassungseinheiten zum Erfassen eines Codes allgemein bekannt. Die bekannten Bilderfassungseinheiten umfassen optische Erfassungsmittel, die ein Bildsignal von einem Erfassungsbereich erzeugen, um einen Code, der auf einem Objekt aufgebracht ist, vollständig zu erfassen. Die Auflösung des Bildsignals hängt von den Eigenschaften der optischen Erfassungsmittel und dem Systemaufbau, also der Entfernung zwischen der Bilderfassungseinheit und dem den Code tragenden Objekt ab. Die Eigenschaften der Erfassungsmittel werden hardwareseitig durch die Auswahl des Objektivs, die Größe der Sensorerfassungsfläche, die Pixelanzahl der Sensorerfassungsfläche und/oder Pixelgröße der Sensorerfassungsfläche bestimmt.

In diesem Zusammenhang ist aus dem Stand der Technik die EP 3 789 906 A1 bekannt, die eine optische Bilderfassungseinheit mit optischen Erfassungsmitteln zum Erzeugen eines Bildsignals offenbart, wobei die Modulgröße und somit die Auflösung des Codes im Bildsignal über die Helligkeitsverteilung bestimmt wird.

Für eine korrekte Funktion der Bilderfassungseinheiten ist es wichtig, dass der Code, der auf einem Objekt außenseitig aufgebracht ist, im erzeugten Bildsignal mit einer ausreichend hohen Auflösung erfasst wird. Eine ausreichend hohe Auflösung liegt immer dann vor, wenn die kleinste Einheit des Code, also die kleinste Codeeinheit, richtig erfasst und somit dekodiert werden kann. Dies stellt die Lesbarkeit des gesamten Codes sicher, der insbesondere Informationen zu dem Objekt enthält. Gleichwohl ist es auch gewünscht, dass durch das Bildsignal ein möglichst großer Erfassungsbereich mit einer ausreichend großen Auflösung erfasst werden kann.

Bei der Konfiguration und/oder Inbetriebnahme der optischen Bilderfassungseinheit besteht für den Anwender die Herausforderung das anwendungsspezifische Optimum zwischen einem möglichst großen Erfassungsbereich einerseits und einer ausreichend hohen Auflösung des Bildsignals andererseits zu finden, um sicherzustellen, dass der erfasste Code vollständig dekodiert werden kann.

Hierfür ist es aus dem Stand der Technik bekannt, den im Bildsignal enthaltenen Code mittels eines Qualitätsratings zu bewerten. Bekannte Lösungen zur direkten Ausgabe von Qualitätsangaben basieren auf Normen wie DIN/ISO 15416 für Barcodes und DIN/ISO 15415 für Datamatrixcodes. Allerdings lässt sich hierbei eine Aussage über die Qualität nur indirekt durch das Auswerten mehrerer Ausgabegrößen treffen, weshalb eine nicht entsprechend geschulte Bedienperson beim Deuten der Daten meist scheitert oder es zu einer Fehlinterpretation kommen kann. Dies hat in der Praxis die Folge, dass Systemaufbauten realisiert werden, bei denen die eingesetzten optischen Bilderfassungseinheiten nicht optimal eingesetzt werden. Dies kann, insbesondere beim Erfassen einer Vielzahl unterschiedlicher Codes, zu Fehlfunktionen führen, da kritische Codes nicht vollständig erfasst werden. Ferner kann es auch zu einer unnötigen Beschränkung des Erfassungsbereichs kommen, weshalb das Potential der Bilderfassungseinheit nicht vollständig ausgeschöpft wird.

Aus diesem Grund ist es Aufgabe der vorliegenden Erfindung die aus dem Stand der Technik bekannten Nachteile zu überwinden. Insbesondere ist es Aufgabe der vorliegenden Erfindung, eine aus dem Stand der Technik bekannte Bilderfassungseinheit dahingehend weiterzubilden, dass auch eine ungeübte Bedienperson unmittelbar eine optimale Auslegung erzielen kann. Ferner ist es Aufgabe der vorliegenden Erfindung ein Verfahren zum Bestimmen einer Größenreserve zur minimalen Auflösungsgrenze eines in einem Bildsignal enthaltenen Codes anzugeben, um somit eine optimale Auslegung zu ermöglichen.

Diese Aufgabe wird durch eine erfindungsgemäße optische Bilderfassungseinheit sowie ein erfindungsgemäßes Verfahren gemäß der unabhängigen Ansprüche gelöst.

Vorteilhafte Weiterbildungen der Erfindung sind in den Unteransprüchen beschrieben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Die vorliegende Erfindung betrifft eine optische Bilderfassungseinheit zum Erfassen eines Codes mit optischen Erfassungsmitteln, die so ausgebildet sind, dass ein den Code enthaltenes Bildsignal mit einer hardwareabhängigen und pixelbasierten Auflösung erzeugbar ist. Ferner umfasst die erfindungsgemäße Bilderfassungseinheit Auswertemittel, die so ausgebildet sind, dass in dem Bildsignal ein Dimensionsmaß einer kleinsten Codeeinheit ermittelbar ist sowie Indikationsmittel, die so ausgebildet sind, dass eine Größenreserve zur minimalen Auflösungsgrenze als Verhältnis zwischen dem Dimensionsmaß der kleinsten Codeeinheit und einem vorgebbaren Grenzwert bestimmbar ist.

Die erfindungsgemäße Bilderfassungseinheit hat den Vorteil, dass durch die berechnete Größenreserve ein für ungeübte Bedienpersonen einfach zu verstehender Faktor ermittelt wird, der eine Aussage über die Codequalität bezüglich seiner abgebildeten Größe und somit den individuellen Systemaufbau liefert. Für jede individuelle bzw. kundenspezifische Anwendung ist hierdurch eine optimale Installation im Rahmen der Inbetriebnahme der Bilderfassungseinheit möglich. Ferner lässt sich die erfindungsgemäße Bilderfassungseinheit auch nachträglich einfach an einen geänderten Systemaufbau und/oder auf einen geänderten Anwendungsfall anpassen und/oder die korrekte Funktion bei einer optischen Anpassung des Codes und/oder des Systemaufbaus überprüfen.

Neben einer einfachen Lesbarkeit der erzeugten Qualitätsangabe, die auch von einer ungeübten Bedienperson nahezu nicht falsch gedeutet und/oder fehlinterpretiert werden kann, zeichnet sich die erfindungsgemäße Bilderfassungseinheit auch durch einen geringen Rechenaufwand aus, da sich die Größenreserve durch eine einfache mathematische Rechenoperation, insbesondere durch eine Multiplikation mit dem als Kehrwert hinterlegten Grenzwert, bestimmen lässt. Vorteilhaft wird durch die zusätzlichen Rechenoperationen der Rechenbedarf nur unwesentlich gesteigert, weshalb bestehende Systeme auch entsprechend umrüstbar sind und damit weitergenutzt werden können.

Die Auswertemittel sind im Rahmen der vorliegenden Erfindung bevorzugt zum Ausführen eines Dekodierungsalgorithmus ausgebildet. Neben dem Ermitteln des Dimensionsmaßes der kleinsten Codeeinheit können die Auswertemittel auch zum Dekodieren des optisch erfassten Codes ausgebildet sein. Die Dekodierungsmittel erfassen hierbei zunächst den im Bildsignal enthaltenen Code, wobei anschließend auch eine vollständige Dekodierung der einzelnen Codeeinheiten, die zusammen den Code ausbilden, erfolgen kann.

Die optischen Erfassungsmittel sind bei der vorliegenden Erfindung bevorzugt als eine ein Objektiv umfassende Kamera und/oder ein ein Objektiv umfassender Codeleser und/oder ein ein Objektiv umfassender Scanner ausgebildet, weshalb die Ausgestaltung der Erfassungsmittel die Eigenschaften des Bildsignals wesentlich beeinflusst. Das Bildsignal ist bevorzugt durch ein zweidimensionales, digitales Bild ausgebildet, das eine feste Auflösung aufweist, die von der Anzahl der für die Digitalisierung genutzten Pixel der Sensorerfassungsfläche abhängt. Die Pixel bilden anders ausgedrückt insbesondere eine ebene Sensorerfassungsfläche aus, auf die die über das Objekt gebündelten Lichtstrahlen auftreffen, die dann von den Pixeln integrativ erfasst werden.

Im Rahmen der vorliegenden Erfindung wird unter einem Code ein 1D-Code oder 2D-Code verstanden. Der 1D-Code ist bevorzugt als Strich- und/oder Barcode ausgebildet und der 2D-Code ist bevorzugt als ein Matrixcode ausgebildet. Der Matrixcode ist weiter bevorzugt als Aztec Code, Data Matrix ECC 200, Micro QR Code, QR Code. Alternativ kann der Matrixcode auch nach dem Standard Dot Code oder PDF417 ausgeführt sein.

Ferner wird bei der vorliegenden Erfindung unter dem Dimensionsmaß der Codeeinheit, insbesondere unter dem Dimensionsmaß der kleinsten Codeeinheit, eine Strichbreite, insbesondere für 1D-Codes, und/oder eine Modulgröße, insbesondere für 2D-Codes, verstanden.

Beim Grenzwert handelt es sich um einen im Vorfeld festgelegten und im System, insbesondere in den Indikationsmitteln, hinterlegten Wert, der von der Struktur des Codes, wie etwa Code-Typ und/oder Codegröße, den optischen Erfassungsmitteln, insbesondere Auflösung und/oder optische Eigenschaften, sowie den Auswertemitteln, insbesondere Art und Funktion eines Dekodierungsalgorithmus, beeinflusst wird. Der hinterlegte Grenzwert ist bevorzugt für Codes wie etwa Aztec Code, Data Matrix ECC 200, Micro QR Code, QR Code identisch, wobei ein Dat Code und ein PDF417 Code bevorzugt individuelle Grenzwerte aufweist.

Gemäß einer ersten möglichen Ausführungsform der erfindungsgemäßen Bilderfassungseinheit ist der erfassbare Code als ein 1D-Code, insbesondere als ein Strich- und/oder Barcode, oder als ein 2D-Code, insbesondere als ein Matrixcode, ausgebildet, wobei die Indikationsmittel in diesem Zusammenhang so ausgebildet und/oder eingerichtet sind, dass bei dem 1D-Code für den Grenzwert ein erster Grenzparameter und bei dem 2D-Code ein zweiter Grenzparameter auswählbar und somit zum Bestimmen der Größenreserve nutzbar ist. Bevorzugt unterscheidet sich der erste Grenzparameter von dem zweiten Grenzparameter, allerdings können die hinterlegten Grenzparameter auch identisch sein.

Aufgrund der Verwendung mehrerer Grenzparameter als Grenzwert wird es ermöglicht, dass der Systemaufbau in Abhängigkeit des zu erfassenden Codes optimierbar ist. In Abhängigkeit der jeweiligen Anwendung erlaubt dies eine Optimierung hinsichtlich eines großen Erfassungsbereichs und/oder eines Reduzierens des kleinsten Dimensionsmaßes des zu erfassenden Codes.

Wie bereits erwähnt, hängt der als Grenzwert hinterlegte Grenzparameter von der Art und/oder der Beschaffenheit des Codes ab. Daher ist es auch vorgesehen, dass in den Indikationsmitteln mehrere Grenzparameter für den Grenzwert hinterlegt sind, wobei die Indikationsmittel dann, insbesondere in Abhängigkeit des zu erfassenden Code-Typs und/oder anderer Eigenschaften, einen der hinterlegten Grenzparameter auswählen und zum Bestimmen der Größenreserve nutzen. Die Auswahl des geeigneten Grenzparameters erfolgt durch die Indikationsmittel aufgrund des erfassten Codes und/oder insbesondere aufgrund des Dekodierungsalgorithmus.

Die Bedienperson kann diese Auswahl beeinflussen und insbesondere durch eine entsprechend vorgesehene Schnittstelle allgemeine Angaben zum Systemaufbau und/oder dem zu erfassenden Code im System hinterlegen, wobei insbesondere auch eine Auswahl verschiedener Dekodierungsalgorithmen, insbesondere eines ersten und/oder eines zweiten Dekodierungsalgorithmus, vorgenommen werden kann.

Weiterbildend ist es vorgesehen, dass die Auswertemittel so ausgebildet sind, dass in Abhängigkeit eines Eingabesignals, insbesondere einer durch eine Benutzerinteraktion getätigte Auswahl, das Dimensionsmaß der kleinsten Codeeinheit mittels eines ersten Dekodierungsalgorithmus rechenzeitoptimiert und/oder mittels eines zweiten Dekodierungsalgorithmus auflöseoptimiert bestimmbar ist. In diesem Zusammenhang sind die Indikationsmittel so ausgebildet, dass für den Grenzwert ein Grenzparameter in Abhängigkeit des zum Bestimmen des Dimensionsmaßes ausgeführten Dekodierungsalgorithmus nutzbar ist.

Anders ausgedrückt bedeutet dies, die Bedienperson hat insbesondere die Möglichkeit, die Bilderfassungseinheit und/oder die Auswertemittel, insbesondere durch eine gezielte Auswahl eines Dekodierungsalgorithmus, hinsichtlich der erforderlichen Rechenzeit einerseits oder der Genauigkeit bei der Dekodierung und/oder Erfassung des Dimensionsmaßes der kleinsten Codeeinheit anderseits zu optimieren.

Rechenzeitoptimiert bedeutet in diesem Zusammenhang, dass ein Dekodierungsalgorithmus eingesetzt wird, der sich durch einen geringen Rechenaufwand auszeichnet und somit in kurzer Zeit und/oder mittels einer kostengünstigen Recheneinheit ausführbar ist.

Auflöseoptimiert bedeutet in diesem Zusammenhang, dass ein Dekodierungsalgorithmus gewählt wird, der den Code mit einer hohen Auflösung erfasst, wobei es grundsätzlich nicht zu einer Reduzierung der gesamten Rechenzeit kommt.

Da bei einem Bildsignal mit hoher Auflösung in Bezug zu einem Bildsignal mit niedriger Auflösung ein größerer Abstand zur Auflösungsgrenze vorliegt, wird insbesondere auch der verwendete Dekodierungsalgorithmus bei der Auswahl des Grenzparameters von den Indikationsmitteln berücksichtigt.

Eine Weiterbildung der vorliegenden Erfindung umfasst eine von der Bilderfassungseinheit und/oder den Indikationsmitteln umfasste Konfigurationseinheit, die so ausgebildet ist, dass für den Grenzwert ein Grenzparameter in Abhängigkeit von wenigstens einem Geräteparameter der Bilderfassungseinheit hinterlegbar ist. Der Geräteparameter ist bevorzugt aus wenigstens einem Element der folgenden Liste gewählt: Objektiv der optischen Erfassungsmittel, Auflösung und/oder Pixelgröße der optischen Erfassungsmittel sowie Beleuchtungsgrad der optischen Erfassungsmittel.

Bei dieser Weiterbildung werden insbesondere die Eigenschaften des Sensors, der Beleuchtung und des Objektivs berücksichtigt, die sich auch auf die Eigenschaften des im Bildsignal enthaltenen Codes auswirken. Somit lässt sich die Bilderfassungseinheit auch mit einem austauschbaren und/oder veränderbaren Objektiv betreiben, wobei bei einer Änderung dieser Größe sich, insbesondere beim Vorliegen einer Relativgeschwindigkeit zwischen dem den Code aufweisenden Objekt und der erfindungsgemäßen Bilderfassungseinheit, auch der hinterlegte Grenzwert zum Bestimmen der erfindungsgemäßen Größenreserve ändern kann, um stets einen optimalen Systemaufbau zu realisieren und/oder eine Einschätzung hinsichtlich der technischen Auflösungsgrenze des vorliegenden Systemaufbaus zu erhalten. Die Bedienperson würde in diesem Zusammenhang insbesondere die geänderten Eigenschaften eines ausgetauschten Objektivs im System hinterlegen, wobei die Indikationsmittel anhand der Eingabe und einer hinterlegten Relativgeschwindigkeit, insbesondere eines die Bilderfassungseinheit umfassenden Roboterarms und/oder eines Förderbandes, das das Objekt mit dem Code führt, einen entsprechend geänderten Grenzparameter wählen.

Weiterbildend ist eine Ausführungsform der Bilderfassungsmittel vorgesehen, wobei die optischen Erfassungsmittel zum Erfassen einer Drehlage der den Code aufweisenden Oberfläche in Bezug auf eine Sensorerfassungsfläche der Erfassungsmittel ausgebildet sind. Weiterhin sind in diesem Zusammenhang die Indikationsmittel so ausgebildet, dass für den Referenzwert ein Referenzparameter in Abhängigkeit der Drehlage, insbesondere eines relativen Drehwinkels, wählbar ist. Vorteilhaft lässt sich somit auch das Erfassen von Codes handhaben, die, insbesondere aufgrund der äußeren Beschaffenheit des Objekts und/oder des Systemaufbaus in einer um eine optische Achse OA verdrehten Ebene zu den optischen Erfassungsmitteln liegen. Allerdings lassen sich durch entsprechende aus dem Stand der Technik allgemein bekannte Auswertealgorithmen auch Bereiche solcher Codes so erfassen und/oder auswerten, dass eine vollständige Dekodierung des Codes erzielt werden kann. Beispielshaft wird in diesem Zusammenhang auf die US 5 979 763 A sowie den wissenschaftlichen Fachartikel mit dem Titel "Decoding bar codes from humanreadable characters" von den Autoren Kjersti Aas und Line Eikvil vom Norwegian Computing Center, P.O. Box 114 Blindern, N-0314 Oslo, Norwegen verwiesen. Solche Auswertealgorithmen wirken sich allerdings dann auch auf die zum Erfassen des Dimensionsmaßes der kleinsten Codeeinheit vorgesehenen Auswertemittel aus, weshalb beim Berechnen der Größenreserve für den Grenzwert ein angepasster Grenzparameter genutzt werden sollte.

Eine bevorzugte Ausführungsform der erfindungsgemäßen optischen Bilderfassungseinheit umfasst ferner Distanzmittel, die von der Bilderfassungseinheit umfasst sind und die so ausgebildet sind, dass ein Maximalabstand zwischen der optischen Bilderfassungseinheit, insbesondere der Sensorerfassungsfläche oder einer zum Objekt ausgerichteten Sensorgehäuseaußenfläche, und dem den Code umfassenden Objekt, insbesondere einer den Code aufweisenden Objektfläche, bestimmbar und insbesondere an eine Bedienperson übermittelbar ist.

Bei einer Erstinbetriebnahme und/oder im Laufe der Betriebszeit einer Produktionsstätte kann somit eine Bedienperson unmittelbar den Maximalabstand $d_{max}$ zwischen der zum Objekt ausgerichteten Sensorgehäuseaußenfläche und einem Erfassungsbereich bestimmen. Der Erfassungsbereich ist bevorzugt durch eine Objektebene ausgebildet, wobei innerhalb der Objektebene der Code, der auf dem Objekt aufgebracht ist, angeordnet ist.

Auch dies trägt in der Praxis synergistisch zur unkomplizierten Handhabung der erfindungsgemäßen Bilderfassungseinheit für die ungeübte Bedienperson bei, da jederzeit der bestehende Systemaufbau hinsichtlich der Auflösungsgrenze evaluiert werden kann.

Hierbei ist zu beachten, dass sich aufgrund des Aufbaus der optischen Erfassungsmittel, insbesondere aufgrund der optischen Eigenschaften des Objektivs, eine weitere

Optimierung in Bezug zur berechneten Größenreserve ergibt, da die erfindungsgemäße Größenreserve den innerhalb des Objektivs ausgebildeten inneren Abstand d' nicht berücksichtigt.

Im Rahmen einer Weiterbildung ist es ferner bevorzugt vorgesehen, dass die Auswertemittel so ausgebildet sind, dass für den Grenzwert ein Grenzparameter in Abhängigkeit einer beim Erfassen des Codes vorliegenden Relativgeschwindigkeit zwischen dem Objekt, das den Code außenseitig umfasst, und den optischen Erfassungsmitteln berücksichtigbar ist. Der Einfluss einer Handhabungsvorrichtung, etwa eines Förderbands und/oder eines Roboterarms, auf die Bilderfassungseinheit kann somit vorteilhaft berücksichtigt werden, um den Code "im Vorbeigehen" des Objekts, also beim Vorliegen einer Relativgeschwindigkeit zwischen dem Objekt und der Bilderfassungseinheit, zu erfassen.

Weiterbildend ist es ferner vorgesehen, dass die Auswertemittel zum Ermitteln von wenigstens zwei Dimensionsmaßen zweier kleinster Codeeinheiten von wenigstens zwei im Bildsignal enthaltenen Codes ausgebildet sind. Die Indikationsmittel sind dabei zum Bestimmen einer ersten Größenreserve des ersten Codes und wenigstens einer zweiten Größenreserve des wenigstens einen zweiten Codes ausgebildet. Ferner sind von der Bilderfassungseinheit oder den Indikationsmitteln umfasste Auswahlmittel vorgesehen, die so ausgebildet sind, dass die geringste Größenreserve ermittelbar und insbesondere an eine Bedienperson übermittelbar ist.

Mit anderen Worten ist die Bilderfassungseinheit bei einer solchen Ausführungsform zum gleichzeitigen Erfassen von mehreren Codes im gleichen Bildsignal oder zeitlich abweichenden Bildsignalen ausgebildet. Hierbei kann für jeden Code, insbesondere in Abhängigkeit seiner Beschaffenheit, eine individuelle Größenreserve bestimmt werden, wobei beim Bestimmen eventuell unterschiedliche Grenzwerte genutzt werden. Weiterhin ist es nun vorgesehen, dass durch die umfassten Auswahlmittel nun die geringste Größenreserve bestimmt wird, wobei es insbesondere auch vorgesehen ist, dass die geringste Größenreserve dann an die Bedienperson übermittelt wird. Vorteilhaft kann somit eine optimierte Auslegung der Bilderfassungseinheit von einer ungeübten Bedienperson auf den kritischsten Anwendungsfall erfolgen.

Weiterbildend sind die optischen Erfassungsmittel zum Erfassen der Aufbringungstechnik des Codes ausgebildet, wobei für den Grenzwert ein Grenzparameter in Abhängigkeit der Beschaffenheit und/oder Aufbringungstechnik des Codes auswählbar ist. Es hat sich nämlich gezeigt, dass sich auch Eigenschaften des Codes, wie etwa die Druckqualität des Codes und/oder die allgemeine Aufbringungstechnik auf die maximale Größenreserve auswirken. Unter der Aufbringungstechnik wird beispielsweise das Erzeugen von genadelten Codes auf Metallkörpern verstanden. Solche Codes sind zwar robust gegenüber äußeren Einflüssen wie etwa UV-Strahlung und/oder hohe Temperatur, sind allerdings meist nur schlecht optisch erfassbar. Aus diesem Grund kann es beim Vorliegen solcher Codes zu einer zusätzlichen Einschränkung bei der Codeerfassung kommen, was sich durch eine reduzierte Größenreserve zeigt, die sich dann aus einem entsprechend angepassten und ausgewählten Grenzparameter ergibt.

Ferner umfasst eine bevorzugte Ausführungsform der erfindungsgemäßen Bilderfassungseinheit Anzeige- und/oder Ausgabemittel, die so ausgebildet sind, dass die Größenreserve, insbesondere die geringste Größenreserve, darstellbar ist und/oder dass die Anzeige- und/oder Ausgabemittel Mittel zum, insbesondere farblichen, Darstellen eines Faktors und/oder eines Wertebereichs umfassen.

Vorteilhaft lässt sich damit die zuvor berechnete Größenreserve unmittelbar an die Bedienperson ausgeben, um somit durch verschiedene farbliche LEDs oder eine Anzeige zum grafischen Ausgeben eines Bereichs oder Faktors eine einfache Übermittlung der Größenreserve an die Bedienperson zu ermöglichen.

Weiterhin wird im Rahmen der vorliegenden Erfindung nicht nur Schutz für eine erfindungsgemäße optische Bilderfassungseinheit beansprucht, sondern auch für ein Verfahren zum Bestimmen einer Größenreserve zur minimalen Auflösungsgrenze eines Codes, das insbesondere mittels einer erfindungsgemäßen optischen Bilderfassungseinheit ausgeführt wird.

Das erfindungsgemäße Verfahren umfasst die folgenden Verfahrensschritte. In einem ersten Verfahrensschritt erfolgt das Erzeugen eines Bildsignals von einem Code mit einer hardwareabhängigen und pixelbasierten Auflösung mit optischen Erfassungsmitteln. Ferner erfolgt, insbesondere in einem zweiten Verfahrensschritt, das Erfassen eines Dimensionsmaßes einer kleinsten Codeeinheit im Bildsignal mit Auswertemitteln. Weiterhin erfolgt das Bestimmen einer Größenreserve zum Darstellen der Auflösungsgrenze mittels Indikationsmittel, wobei das Verhältnis zwischen dem Dimensionsmaß der kleinsten Codeeinheit und einem vorgebbaren Grenzwert bestimmt wird.

Weitere Vorteile, Merkmale und Einzelheiten der Erfindung ergeben sich aus der nachfolgenden Beschreibung bevorzugter Ausführungsbeispiele sowie anhand der

Zeichnungen. In den Zeichnungen werden für Elemente gleicher Funktion und/oder gleichen Aufbaus stets dieselben Bezugszeichen verwendet.

Es zeigen:

Fig. 1:    eine schematische Darstellung einer erfindungsgemäßen optischen Bilderfassungseinheit gemäß einer ersten bevorzugten Ausführungsform;

Fig. 2a/b:    eine schematische Darstellung der optischen Bilderfassungseinheit einer zweiten beispielhaften Ausführungsform;

Fig. 3a/b:    eine schematische Darstellung einer Sensorauftrittsfläche mit quadratisch dargestellten, unmittelbar benachbarten Pixeln sowie

Fig. 4:    eine schematische Schnittdarstellung eines Systemaufbaus, um das Wirkprinzip der Distanzmittel schematisch abzubilden.

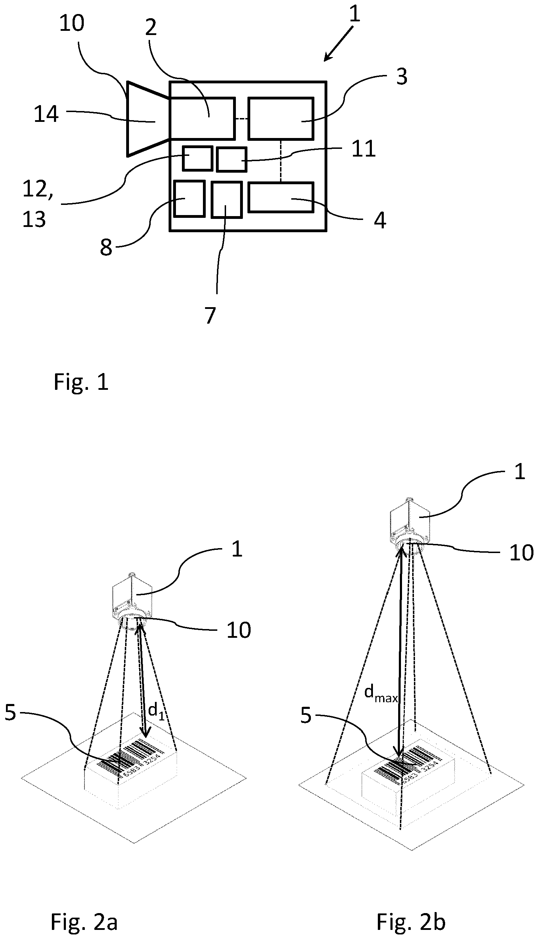

Die Fig. 1 zeigt eine erfindungsgemäße optische Bilderfassungseinheit 1 gemäß einer ersten bevorzugten Ausführungsform in einer stark schematisierten Darstellung. Die Bilderfassungseinheit 1 ist zum Erfassen eines Codes ausgebildet und weist zunächst optische Erfassungsmittel 2 zum Erzeugen eines Bildsignals auf. Das Bildsignal umfasst eine hardwareabhängige und pixelbasierte Auflösung und enthält einen Code, der insbesondere auf einem Objekt aufgebracht ist. Funktional stehen die Erfassungsmittel 2 mit Auswertemitteln 3 der Bilderfassungseinheit 1 in Wirkkontakt. Die Auswertemittel 3 sind dazu eingerichtet, dass ein Dimensionsmaß einer kleinsten Codeeinheit des im Bildsignal enthaltenen Codes erfasst werden kann.

Falls der Code durch einen Strichcode ausgebildet ist, so besteht die kleinste Codeeinheit aus der kleinsten Strichbreite des Strichcodes. Bei einem Matrixcode wird die kleinste Codeeinheit dagegen durch die kleinste Modulgröße ausgebildet.

Ferner umfasst die dargestellte Bilderfassungseinheit 1 auch Indikationsmittel 4, die dahingehend eingerichtet sind, dass eine Größenreserve zur minimalen Auflösungsgrenze des Codes, insbesondere zur kleinsten Codeeinheit, durch das Bestimmen des Verhältnisses zwischen dem Dimensionsmaß der kleinsten Codeeinheit und einem vorgebbaren Grenzwert bestimmbar ist. Für den Grenzwert ist wenigstens ein Grenzparameter in den Indikationsmitteln 4 hinterlegt, der anhand der Eigenschaften der Bilderfassungseinheit 1, dem Systemaufbau und der Beschaffenheit des Codes im Vorfeld bestimmt wurde.

Weiterhin umfasst die dargestellte Ausführungsform der Bilderfassungseinheit 1 Anzeige- und/oder Ausgabemittel 12, die dazu eingerichtet sind, die von den Indikationsmitteln 4 bestimmte Größenreserve grafisch anzuzeigen und/oder auszugeben. Eine Ausgabe kann in diesem Zusammenhang durch ein Leuchtmittel, etwa codiert durch eine Blinkfolge einer oder mehrerer LEDs, erfolgen. Alternativ kann die Ausgabe auch durch mehrere farbliche LEDs erzielt werden, wobei etwa eine grüne LED eine große Größenreserve, eine gelbe LED eine geringe Größenreserve und eine rote LED eine zu geringe Größenreserve signalisiert.

Ferner können die Anzeige- und/oder Ausgabemittel 12 auch durch Mittel zum Darstellen eines Faktors und/oder eines Wertebereichs 13 ausgebildet sein, um etwa mittels einer 7-Segment-Anzeige einen normierten Faktor auszugeben oder ein standardisiertes Display für die Ausgabe der bestimmten Größenreserve zu nutzen.

Zudem umfasst die dargestellte Ausführungsform der erfindungsgemäßen optischen Bilderfassungseinheit 1 Distanzmittel 8, die zum Bestimmen eines Maximalabstands ausgebildet sind. Der Maximalabstand ergibt sich aus der Distanz zwischen der optischen Bilderfassungseinheit 1, insbesondere einer nicht in der Fig. 1 dargestellten Sensorerfassungsfläche 9 der optischen Sensorerfassungsmittel 2 oder einer Sensorgehäuseaußenfläche 10 der erfindungsgemäßen, optischen Bilderfassungseinheit 1, und dem den Code aufweisenden Objekt.

Weiterhin sind Auswahlmittel 11 schematisch dargestellt, die so ausgebildet sind, dass beim Erfassen von mehreren Codes in einem Bildsignal und dem Bestimmen mehrerer unterschiedlicher Größenreserven nur die geringste und somit das System limitierende Größenreserve an eine Bedienperson über die Anzeige- und/oder Ausgabemittel 12 übermittelbar ist.

Schließlich umfasst die dargestellte Ausführungsform der Bilderfassungseinheit 1 auch eine Konfigurationseinheit 7, die dahingehend ausgebildet ist, dass für den Grenzwert ein Grenzparameter in Abhängigkeit von wenigstens einem Geräteparameter der Bilderfassungseinheit 1 hinterlegbar ist, wobei als Geräteparameter die Eigenschaften des Objektivs 14 der optischen Erfassungsmittel 2 und/oder der Grat der Auflösung und/oder die Pixelgröße der optischen Erfassungsmittel 2 und/oder ein Beleuchtungsgrad der optischen Erfassungsmittel 2, der beim Erfassen des Codes vorliegt und somit erfassbar oder gezielt erzeugbar ist, berücksichtigt wird.

In den Fig. 2a und 2b ist eine erfindungsgemäße optische Bilderfassungseinheit 1 gemäß einer zweiten Ausführungsform gezeigt, wobei das Erfassen eines Codes 5 erfolgt. Der Code 5 ist im vorliegenden Fall als ein Strichcode ausgebildet, der auf der Außenseite eines rechteckförmigen Objekts aufgedruckt ist.

In der Fig. 2a erfolgt das Erfassen des Codes mit einem Abstand $d_1$ zwischen der Sensorgehäuseaußenfläche 10, die zum Objekt ausgerichtet ist und somit insbesondere durch das Objektiv definiert wird und der den Code aufweisenden Objektaußenfläche, der in Bezug auf den in der Fig. 2b gezeigten Abstand $d_{max}$ klein ausfällt. Vorteilhaft wurde nämlich der ursprüngliche Systemaufbau gemäß der Fig. 2a hinsichtlich eines möglichst großen Erfassungsbereichs in den optimierten Systemaufbau nach der Fig. 2b überführt, wobei die erfindungsgemäße Bilderfassungseinheit 1 im optimierten Systemaufbau nach der Fig. 2b an der Auflösungsgrenze betrieben wird. Der Erfassungsbereich der Fig. 2b ist somit größer als in der Fig. 2a, weshalb auch der im Bildsignal enthaltene Code im Systemaufbau nach der Fig. 2b optisch kleiner ausfällt als im Systemaufbau nach der Fig. 2a.

Beim Betrieb der optischen Bilderfassungseinheit 1 an der Auflösungsgrenze fällt die Auflösung der kleinsten Codeeinheit im Bildsignal gerade so groß aus, dass eine Umgebung des Strichcodes vollständig erfasst ist und der darin erfasste Strichcode fehlerfrei decodiert werden kann. Die Auflösungsgrenze bestimmt sich im Wesentlichen durch das Dimensionsmaß der kleinsten Codeeinheit, die im vorliegenden Ausführungsbeispiel durch die kleinste Strichbreite der schwarzen bzw. weißen Striche des dargestellten Strichcodes ausgebildet ist.

Im Systemaufbau nach der Fig. 2a wurde von den vorliegend nicht grafisch dargestellten Indikationsmitteln 4 der erfindungsgemäßen Bilderfassungseinheit 1 eine Größenreserve r von 2 bestimmt. Für den Grenzwert haben die Indikationsmittel 4 einen Grenzparameter von 1,5 Pixel genutzt, der im Vorfeld für das Erfassen von gedruckten Strichcodes mittels der vorliegenden optischen Bilderfassungseinheit 1 festgelegt wurde. Die Auswertemittel 3, die vorliegend nicht figürlich dargestellt sind, konnten somit als Dimensionsmaß für die kleinste Strichbreite des Codes einen Wert von 3 Pixel aus dem Bildsignal bestimmen.

Im Systemaufbau nach der Fig. 2b weist die Größenreserve $r$ einen Wert von 1 auf. Für den Grenzwert gilt weiterhin der Grenzparameter mit 1,5 Pixel. Das Dimensionsmaß der kleinsten Codeeinheit, also die im Bildsignal ermittelte kleinste Strichbreite, wurde von den Auswertemitteln zu 1,5 Pixel bestimmt.

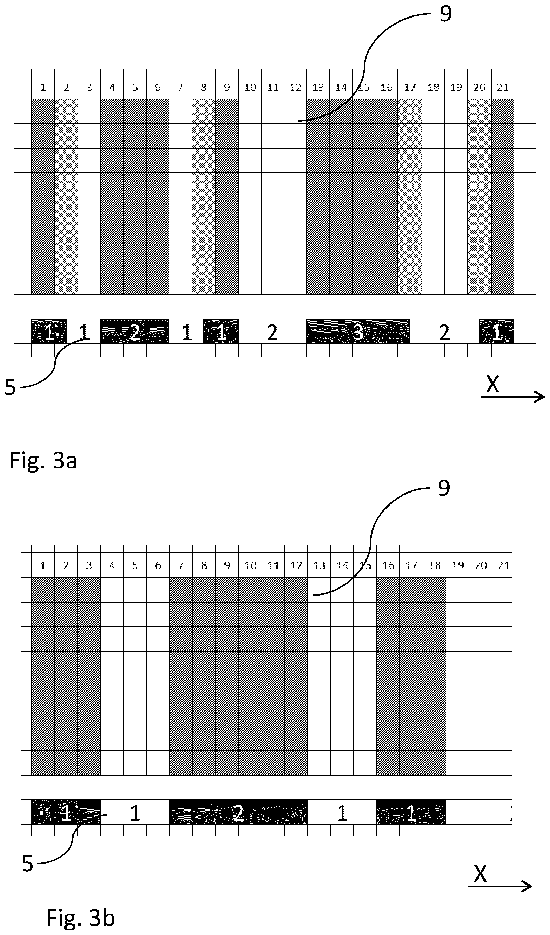

Die Fig. 3a und 3b zeigen jeweils stark schematisiert einen Ausschnitt der Sensorerfassungsfläche 9, der in einem oberen Bereich dargestellt ist und einen durch einen Zeilenschnitt ausgebildeten Ausschnitt eines Codes 5, der in einem unteren Bereich dargestellt ist.

Bei dem bereichsweise dargestellten Code 5 handelt es sich um einen Strichcode, der sich entlang einer X-Richtung aus hellen und dunklen Bereichen zusammensetzt. Die Breite der Bereiche, also die Strichbreite des Strichcodes, ist in dem Zeilenschnitt durch die Ziffern "1", "2" und "3" symbolisch dargestellt. Das Dimensionsmaß der kleinsten Codeeinheit, also die dünnste Strichbreite, beträgt somit "1" und wird durch weiße und schwarze Bereiche bzw. Striche ausgebildet.

Die im oberen Bereich der Fig. 3a dargestellte Sensorerfassungsfläche 9 wird durch eine Vielzahl von unmittelbar benachbarten Pixeln ausgebildet, die als quaderförmige Kästen grafisch dargestellt sind. Sämtliche Pixel sind zum Ausbilden der Sensorerfassungsfläche 9 zeilen- und spaltenförmig angeordnet. Durch ein in der Figur nicht dargestelltes Objektiv 14 der Erfassungsmittel 2 wird der im unteren Bereich dargestellte Code auf die Sensorauftrittsfläche hinsichtlich der X-Richtung positionsabhängig abgebildet, wobei die auftreffenden Strahlen über eine Belichtungszeit von jedem Pixel integrativ erfasst und in ein Ausgangssignal umgewandelt werden.

Der hinsichtlich der X-Richtung erste schwarze Strich, der ganz links angeordnet ist und eine Breite von "1" aufweist, wird somit auf die Pixel der ersten Spalte und bereichsweise auf die Pixel der zweiten Spalte abgebildet. Der zum ersten schwarzen Strich unmittelbar benachbarte erste weiße Strich wird teilweise auf die Pixel der zweiten Spalte und vollständig auf die Pixel der dritten Spalte abgebildet. Für die Pixel der ersten bis dritten Spalte ergeben sich daher über die Belichtungszeit unterschiedliche relative Grauwerte, was symbolisch durch die verschiedenen Markierungen der einzelnen Pixel dargestellt ist. Eine dunkle Schraffierung entspricht einem geringen relativen Grauwert, eine helle Schraffierung entspricht einem mittleren relativen Grauwert und eine fehlende Schraffierung entspricht einem großen relativen Grauwert.

Aus dem Bildsignal lässt sich somit für das Dimensionsmaß der kleinsten Codeeinheit ein Betrag von 1,5 Pixel bestimmen.

Die Fig. 3b entspricht im Wesentlichen der Fig. 3a, wobei sich für das Dimensionsmaß der kleinsten Codeeinheit, die im dargestellten Codeausschnitt wiederum durch die Ziffer "1" dargestellt ist, ein Betrag von 3 Pixeln bestimmen lässt, da der erste schwarze Strich durch das Objektiv vollständig auf die Pixel der ersten drei Spalten abgebildet wird.

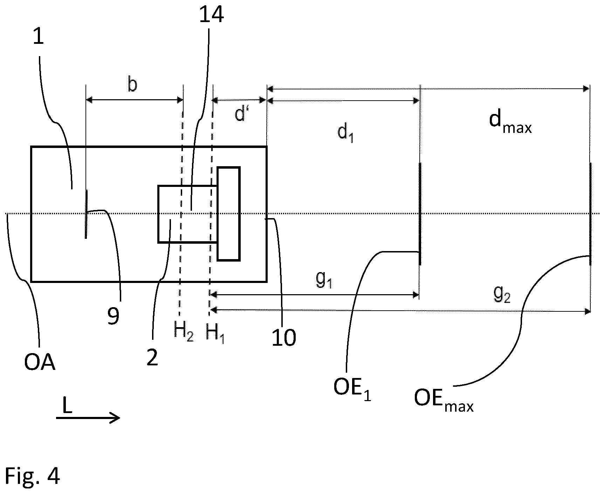

In der Fig. 4 ist der wesentliche Zusammenhang der Distanzmittel 8, also deren Wirkprinzip, schematisch dargestellt.

Zunächst ist die aus der Fig. 1 bekannte Bilderfassungseinheit 1 mit der Sensorerfassungsfläche 9 und den optischen Erfassungsmitteln 2, die das Objektiv 14 mit seiner optischen Achse OA umfassen, gezeigt. Das Objektiv 14 bildet optisch eine Objektebene auf eine Bildebene ab, wobei eine erste Hauptebene $H_1$ und eine zweite Hauptebene $H_2$ durch das Objektiv 14 verlaufen. Die erste Objektebene $OE_1$ ist entlang der Längsrichtung L durch eine erste Gegenstandsweite $g_1$ von der ersten Hauptebene $H_1$ beabstandet, wobei sich die erste Gegenstandsweite $g_1$ zum einen aus einem inneren Abstand d' und einem im Folgenden als Arbeitsabstand bezeichneten äußeren Abstand $d_1$ zusammensetzt. Der innere Abstand erstreckt sich zwischen der ersten Hauptebene $H_1$ und der Sensorgehäuseaußenfläche 10 und verläuft somit vollständig innerhalb der Bilderfassungseinheit 1. Der innere Abstand d' ist daher für eine Bedienperson nicht ersichtlich. Der Arbeitsabstand $d_1$ erstreckt sich in Längsrichtung L zwischen der Sensorgehäuseaußenfläche 10 und der ersten Objektebene $OE_1$.

Über den Abbildungsmaßstab β mit

$$\beta = \frac{b}{g} = \frac{f}{g-f} \ ,$$

wobei b der Bildweite, g der Gegenstandsweite und f der Brennweite entspricht und der Größenreserve r mit

$$r = \frac{\beta_1}{\beta_2}$$

lässt sich das folgende Verhältnis für die Größenreserve r bestimmen:

$$r = \frac{g_2 - f}{g_1 - f} = \frac{d' + d_{max} - f}{d' + d_1 - f}$$

Daraus ergibt sich nun eine Berechnungsformel für den Maximalabstand $d_{max}$, für den der folgende Zusammenhang gilt:

$$d_{max} = (d' - f)(r - 1) + rd_1$$

Die Distanzmittel 8 sind zum Ausführen dieser Berechnungsformel ausgebildet und umfassen hierfür den vom Hersteller festgelegten inneren Abstand $d'$. Auch die Brennweite f sowie dem Arbeitsabstand $d_1$ sind in den Distanzmitteln 8 hinterlegt, weshalb die Distanzmittel 8 nach dem einmaligen Bestimmen der Größenreserve r mittels der Indikationsmittel 4 den Maximalabstand $d_{max}$ bestimmen können.

Bei einer Brennweite f von 6mm, einem bekannten inneren Abstand d' von 20mm, einem von der Bedienperson eingestellten oder automatisiert erfassten Arbeitsabstand $d_1$ von 50mm und eine von den Indikationsmitteln 4 für den bestehenden Systemaufbau bestimmte Größenreserve von 2 ergibt sich somit ein Maximalabstand $d_{max}$ von 114mm. Aufgrund des für die Bedienperson nicht bekannten inneren Abstands d' ergibt sich der Maximalabstand $d_{max}$ nicht unmittelbar als Vielfachens der Größenreserve, was zu einer weiteren vorteilhaften Ausführungsform der vorliegenden optischen Bilderfassungseinheit 1 führt.

Im Ergebnis ermöglicht die vorliegende Erfindung auf überraschend einfache Weise die Handhabung der aus dem Stand der Technik bekannten Bilderfassungseinheiten zu optimieren. Eine ungeübte Bedienperson kann somit einfach eine Qualitätsangabe zu einem optisch erfassten Code erhalten, um eine anwendungsabhängige Optimierung zu erzielen. Dies führt zu vorteilhaften Kosteneinsparungen und erweitert das Einsatzgebiet sowie die Lebensdauer der erfindungsgemäßen Bilderfassungseinheit deutlich.

## Patentansprüche

1.  Optische Bilderfassungseinheit (1) zum Erfassen eines Codes (5), umfassend optische Erfassungsmittel (2), die so ausgebildet sind, dass ein den Code (5) abbildendes Bildsignal mit einer hardwareabhängigen und pixelbasierten Auflösung erzeugbar ist, **gekennzeichnet durch**

    Auswertemittel (3), die so ausgebildet sind, dass ein Dimensionsmaß einer kleinsten Codeeinheit im Bildsignal ermittelbar ist sowie Indikationsmittel (4), die so ausgebildet sind, dass eine Größenreserve zur minimalen Auflösungsgrenze als Verhältnis zwischen dem Dimensionsmaß der kleinsten Codeeinheit und einem vorgebbaren Grenzwert bestimmbar ist.

2.  Optische Bilderfassungseinheit nach Anspruch 1, **dadurch gekennzeichnet,** **dass** der erfassbare Code als ein 1D-Code, insbesondere als ein Strich- und/oder Barcode, oder als ein 2D-Code, insbesondere als ein Matrixcode, ausgebildet ist, wobei die Indikationsmittel (4) so ausgebildet sind, dass für den Grenzwert bei dem 1D-Code ein erster Grenzparameter und bei dem 2D-Code ein zweiter Grenzparameter auswählbar ist, wobei sich der erste Grenzparameter bevorzugt von dem zweiten Grenzparameter unterscheidet.

3.  Optische Bilderfassungseinheit nach Anspruch 1 oder 2, **dadurch gekennzeichnet,** **dass** die Auswertemittel (3) so ausgebildet sind, dass in Abhängigkeit eines Eingabesignals, insbesondere einer durch eine Benutzerinteraktion getätigte Auswahl, das Dimensionsmaß der kleinsten Codeeinheit mittels eines ersten Dekodierungsalgorithmus rechenzeitoptimiert und/oder mittels eines zweiten Dekodierungsalgorithmus auflöseoptimiert bestimmbar ist, wobei die Indikationsmittel (4) so ausgebildet sind, dass für den Grenzwert ein Grenzparameter in Abhängigkeit des zum Bestimmen des Dimensionsmaßes ausgeführten Dekodierungsalgorithmus hinterlegbar ist.

4.  Optische Bilderfassungseinheit nach einem der vorhergehenden Ansprüche, **gekennzeichnet durch** eine von der Bilderfassungseinheit (1) und/oder den Indikationsmitteln (4) umfasste Konfigurationseinheit (7), die so ausgebildet ist, dass für den Grenzwert ein Grenzparameter in Abhängigkeit von wenigstens einem Geräteparameter der Bilderfassungseinheit hinterlegbar ist, wobei der Geräteparameter aus wenigstens einem Element der folgenden Liste gewählt ist: Objektiv (14) der optischen Erfassungsmittel (2), Auflösung und/oder Pixelgröße der optischen Erfassungsmittel (2), Beleuchtungsgrad der optischen Erfassungsmittel (2).

5. Optische Bilderfassungseinheit nach einem der vorhergehenden Ansprüche,
**dadurch gekennzeichnet,**

dass die optischen Erfassungsmittel (2) zum Erfassen einer Drehlage der den Code aufweisenden Oberfläche in Bezug zu einer Sensorerfassungsfläche (9) der Erfassungsmittel (2) ausgebildet sind,
wobei die Indikationsmittel (4) so ausgebildet sind, dass für den Grenzwert ein Grenzparameter in Abhängigkeit der Drehlage, insbesondere eines relativen Drehwinkels, wählbar ist.

6. Optische Bilderfassungseinheit nach einem der vorhergehenden Ansprüche, **gekennzeichnet durch** von der Bilderfassungseinheit (1) umfasste Distanzmittel (8), die so ausgebildet sind, dass ein Maximalabstand zwischen der optischen Bilderfassungseinheit (1), insbesondere der zum Objekt ausgerichteten Sensorerfassungsfläche (9) oder einer Sensorgehäuseaußenfläche (10), und dem den Code (5) umfassenden Objekt, insbesondere einer den Code tragenden Objektfläche, bestimmbar und insbesondere an eine Bedienperson übermittelbar ist.

7. Optische Bilderfassungseinheit nach einem der vorhergehenden Ansprüche,
**dadurch gekennzeichnet,**
dass die Auswertemittel (3) so ausgebildet sind, dass für den Grenzwert ein Grenzparameter in Abhängigkeit einer beim Erfassen des Codes vorliegenden Relativgeschwindigkeit zwischen dem den Code (5) aufweisenden Objekt und den optischen Erfassungsmitteln (2) berücksichtigbar ist.

8. Optische Bilderfassungseinheit nach einem der vorhergehenden Ansprüche, **dadurch gekennzeichnet, dass** die Auswertemittel (3) zum Ermitteln von wenigstens zwei Dimensionsmaßen zweier kleinster Codeeinheiten von wenigstens zwei im Bildsignal enthaltenen Codes (5) ausgebildet sind, dass die Indikationsmittel (4) zum Bestimmen einer ersten Größenreserve des ersten Codes (5) und wenigstens einer zweiten Größenreserve des wenigstens einen zweiten Codes (5) ausgebildet sind, sowie von der Bilderfassungseinheit (1) und/oder den Indikationsmitteln (4) umfasste Auswahlmittel (11), die so ausgebildet sind, dass die geringste Größenreserve ermittelbar und insbesondere an eine Bedienperson übermittelbar ist.

9. Optische Bilderfassungseinheit nach einem der vorhergehenden Ansprüche,
**dadurch gekennzeichnet,**
**dass** die optischen Erfassungsmittel (2) zum Erfassen der Aufbringungstechnik des Codes (5) ausgebildet sind, wobei für den Grenzwert ein Grenzparameter in Abhängigkeit der Aufbringungstechnik auswählbar ist.

10. Optische Bilderfassungseinheit nach einem der vorhergehenden Ansprüche,
**dadurch gekennzeichnet,**
**dass** die optische Bilderfassungseinheit (1) Anzeige- und/oder Ausgabemittel (12) umfasst, die so ausgebildet sind, dass die Größenreserve, insbesondere die geringste Größenreserve, darstellbar ist und/oder dass die Anzeige- und/oder Ausgabemittel (12) Mittel zum, insbesondere farblichen, Darstellen eines Faktors und/oder eines Wertebereichs (13) umfassen.

11. Verfahren zum Bestimmen einer Größenreserve zur minimalen Auflösungsgrenze eines Codes, insbesondere mittels einer nach einem der Ansprüche 1 bis 10 ausgebildeten optischen Bilderfassungseinheit (1), umfassend die folgenden Schritte:

- Erzeugen eines Bildsignals von einem Code mit einer hardwareabhängigen und pixelbasierten Auflösung mittels optischen Erfassungsmitteln (2);
- Erfassen eines Dimensionsmaßes einer kleinsten Codeeinheit im Bildsignal mittels Auswertemitteln (3);
- Bestimmen einer Größenreserve zum Darstellen der Auflösungsgrenze mittels Indikationsmitteln (4), wobei das Verhältnis zwischen dem Dimensionsmaß der kleinsten Codeeinheit (5) und einem vorgebbaren Grenzwert bestimmt wird.

**Claims**

1. Optical image capture unit (1) for capturing a code (5), comprising optical capture means (2) which are designed such that an image signal that depicts the code (5) and has a hardware-dependent and pixel-based resolution can be generated, **characterized by** evaluation means (3) which are designed such that a dimension measurement of a smallest code unit in the image signal can be determined and indication means (4) which are designed such that a size reserve for the minimum resolution limit can be ascertained as a ratio between the dimension measurement of the smallest code unit and a predefinable limit value.

2. Optical image capture unit according to claim 1, **characterized in that** the detectable code is designed as a 1D code, in particular as a linear code and/or barcode, or as a 2D code, in particular as a matrix code, the indication means (4) being designed such that, for the limit value, a first limit parameter can be selected in the case of the 1D code and a second limit parameter can be selected in the case of the 2D code, the first limit parameter preferably differing from the second limit parameter.

3. Optical image capture unit according to claim 1 or claim 2, **characterized in that** the evaluation means (3) are designed such that, depending on an input signal, in particular on a selection made by a user interaction, the dimension measurement of the smallest code unit can be ascertained in a computing time-optimized manner by means of a first decoding algorithm and/or in a resolution-optimized manner by means of a second decoding algorithm, the indication means (4) being designed such that, for the limit value, a limit parameter can be stored depending on the decoding algorithm carried out to ascertain the dimension measurement.

4. Optical image capture unit according to any of the preceding claims, **characterized by** a configuration unit (7) comprised by the image capture unit (1) and/or by the indication means (4), which configuration unit is designed such that, for the limit value, a limit parameter can be stored depending on at least one device parameter of the image capture unit, the device parameter being selected from at least one element of the following list: lens (14) of the optical capture means (2), resolution and/or pixel size of the optical capture means (2), degree of illumination of the optical capture means (2).

5. Optical image capture unit according to any of the preceding claims, **characterized in that** the optical capture means (2) are designed to capture a rotational position of the surface which has the code in relation to a sensor capture surface (9) of the capture means (2), the indication means (4) being designed such that, for the limit value, a limit parameter can be selected depending on the rotational position, in particular on a relative rotation angle.

6. Optical image capture unit according to any of the preceding claims, **characterized by** spacing means (8) comprised by the image capture unit (1), which spacing means are designed such that a maximum distance between the optical image capture unit (1), in particular the sensor capture surface (9), which is aligned with the object, or a sensor housing outer surface (10), and the object which comprises the code (5), in particular an object surface which bears the code, can be ascertained and in particular transmitted to an operator.

7. Optical image capture unit according to any of the preceding claims, **characterized in that** the evaluation means (3) are designed such that, for the limit value, a limit parameter can be taken into account depending on a relative speed, when capturing the code, between the object which has the code (5) and the optical capture means (2).

8. Optical image capture unit according to any of the preceding claims, **characterized in that** the evaluation means (3) are designed to determine at least two dimension measurements of the two smallest code units of at least two codes (5) contained in the image signal, **in that** the indication means (4) are designed to ascertain a first size reserve of the first code (5) and at least one second size reserve of the at least one second code (5), and selection means (11) comprised by the image capture unit (1) and/or by the indication means (4), which selection means are designed such that the smallest size reserve can be determined and in particular transmitted to an operator.

9. Optical image capture unit according to any of the preceding claims, **characterized in that** the optical capture means (2) are designed to capture the application technique of the code (5), it being possible to select, for the limit value, a limit parameter depending on the application technique.

10. Optical image capture unit according to any of the preceding claims, **characterized in that** the optical image capture unit (1) comprises display and/or output means (12) which are designed such that the size reserve, in particular the smallest size reserve, can be displayed and/or that the display and/or output means (12) comprise means for displaying, in particular in color, a factor and/or a value range (13).

11. Method for ascertaining a size reserve for the minimum resolution limit of a code, in particular by means of an optical image capture unit (1) designed according to any of claims 1 to 10, the method comprising the following steps:

   - generating an image signal from a code which has a hardware-dependent and pixel-based resolution by means of optical capture means (2);
   - capturing a dimension measurement of a smallest code unit in the image signal by means of evaluation means (3);
   - ascertaining a size reserve for displaying the resolution limit by means of indication means (4), wherein the ratio between the dimension measurement of the smallest code unit (5) and a predefinable limit value is ascertained.

## Revendications

1. Unité (1) d'acquisition d'image optique destinée à acquérir un code (5), comprenant des moyens d'acquisition optique (2) qui sont conçus de telle sorte qu'un signal d'image représentant le code (5) peut être généré avec une résolution dépendant du matériel et basée sur les pixels, **caractérisée par** des moyens d'évaluation (3) qui sont conçus de telle sorte qu'une mesure dimensionnelle d'une unité de code la plus petite peut être déterminée dans le signal d'image ainsi que des moyens d'indication (4) qui sont conçus de telle sorte qu'une réserve de grandeur pour la limite de résolution minimale peut être déterminée comme rapport entre la mesure dimensionnelle de la plus petite unité de code et une valeur limite pouvant être prédéfinie.

2. Unité d'acquisition d'image optique selon la revendication 1, **caractérisée en ce que** le code pouvant être acquis est conçu sous la forme d'un code 1D, en particulier d'un code-barres et/ou un code à barres, ou sous la forme d'un code 2D, en particulier d'un code matriciel, les moyens d'indication (4) étant conçus de telle sorte que, pour la valeur limite, un premier paramètre limite peut être sélectionné pour le code 1D et un second paramètre limite peut être sélectionné pour le code 2D, le premier paramètre limite se distinguant de préférence du second paramètre limite.

3. Unité d'acquisition d'image optique selon la revendication 1 ou 2, **caractérisée en ce que** les moyens d'évaluation (3) sont conçus de telle sorte qu'en fonction d'un signal d'entrée, en particulier d'une sélection effectuée par une interaction de l'utilisateur, la mesure dimensionnelle de la plus petite unité de code peut être déterminée de manière optimisée en temps de calcul à l'aide d'un premier algorithme de décodage et/ou de manière optimisée en résolution à l'aide d'un second algorithme de décodage, les moyens d'indication (4) étant conçus de telle sorte qu'un paramètre limite peut être consigné pour la valeur limite en fonction de l'algorithme de décodage exécuté pour la détermination de la mesure dimensionnelle.

4. Unité d'acquisition d'image optique selon l'une des revendications précédentes, **caractérisée par** une unité de configuration (7) incluse dans l'unité (1) d'acquisition d'image et/ou les moyens d'indication (4), qui est conçue de telle sorte qu'un paramètre limite peut être consigné pour la valeur limite en fonction d'au moins un paramètre d'appareil de l'unité d'acquisition d'image, le paramètre d'appareil étant choisi parmi au moins un élément de la liste suivante : objectif (14) des moyens d'acquisition optique (2), résolution et/ou grandeur de pixel des moyens d'acquisition optique (2), degré d'éclairage des moyens d'acquisition optique (2).

5. Unité d'acquisition d'image optique selon l'une des revendications précédentes, **caractérisée**

   **en ce que** les moyens d'acquisition optique (2) sont conçus pour l'acquisition d'une position de rotation de la surface présentant le code par rapport à une surface d'acquisition (9) de capteur des moyens d'acquisition (2), les moyens d'indication (4) étant conçus de telle sorte qu'un paramètre limite peut être sélectionné pour la valeur limite en fonction de la position de rotation, en particulier d'un angle de rotation relatif.

6. Unité d'acquisition d'image optique selon l'une des revendications précédentes, **caractérisée par** des moyens de distance (8) inclus dans l'unité (1) d'acquisition d'image, qui sont conçus de telle sorte qu'une distance maximale entre l'unité (1) d'acquisition d'image optique, en particulier la surface d'acquisition (9) de capteur orientée vers l'objet ou une surface extérieure (10) de boîtier de capteur, et l'objet comprenant le code (5), en particulier une surface d'objet portant le code, peut être déterminée et peut en particulier être transmise à un opérateur.

7. Unité d'acquisition d'image optique selon l'une des revendications précédentes, **caractérisée en ce que** les moyens d'évaluation (3) sont conçus de telle sorte qu'un paramètre limite peut être pris en compte pour la valeur limite en fonction d'une vitesse relative présente lors de l'acquisition du code entre l'objet présentant le code (5) et les moyens d'acquisition optique (2).

8. Unité d'acquisition d'image optique selon l'une des revendications précédentes, **caractérisée en ce que** les moyens d'évaluation (3) sont conçus pour la détermination d'au moins deux mesures dimensionnelles de deux unités de code les plus petites d'au moins deux codes (5) contenus dans le signal d'image, **en ce que** les moyens d'indication (4) sont conçus pour la détermination d'une première réserve de grandeur du premier code (5) et d'au moins une seconde réserve de grandeur de l'au moins un second code (5), ainsi que des moyens de sélection (11) inclus dans l'unité (1) d'acquisition d'image et/ou les moyens d'indication (4), qui sont conçus de telle sorte que la réserve de grandeur la plus basse peut être déterminée et peut en particulier être transmise à un opérateur.

9. Unité d'acquisition d'image optique selon l'une des revendications précédentes, **caractérisée en ce que** les moyens d'acquisition optique (2) sont conçus pour l'acquisition de la technique d'application du code (5), un paramètre limite pouvant être sélectionné pour la valeur limite en fonction de la technique d'application.

10. Unité d'acquisition d'image optique selon l'une des revendications précédentes, **caractérisée en ce que** l'unité (1) d'acquisition d'image optique comprend des moyens d'affichage et/ou de sortie (12) qui sont conçus de telle sorte que la réserve de grandeur, en particulier la réserve de grandeur la plus basse, peut être représentée et/ou **en ce que** les moyens d'affichage et/ou de sortie (12) comprennent des moyens pour la représentation, en particulier en couleur, d'un facteur et/ou d'une plage de valeurs (13).

11. Procédé de détermination d'une réserve de grandeur par rapport à la limite minimale de résolution d'un code, en particulier à l'aide d'une unité (1) d'acquisition d'image optique conçue selon l'une des revendications 1 à 10, comprenant les étapes suivantes :

> - génération d'un signal d'image à partir d'un code présentant une résolution dépendant du matériel et basée sur les pixels, à l'aide de moyens d'acquisition optique (2) ;
> - acquisition d'une mesure dimensionnelle d'une unité de code la plus petite dans le signal d'image à l'aide de moyens d'évaluation (3) ;
> - détermination d'une réserve de grandeur pour la représentation de la limite de résolution à l'aide de moyens d'indication (4), le rapport entre la mesure dimensionnelle de la plus petite unité de code (5) et une valeur limite pouvant être prédéfinie étant déterminé.

Fig. 1

Fig. 2a                    Fig. 2b

Fig. 3a

Fig. 3b

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3789906 A1

- US 5979763 A

**In der Beschreibung aufgeführte Nicht-Patentliteratur**

- **AUTOREN KJERSTI AAS** ; **LINE EIKVIL**. Decoding bar codes from humanreadable characters. Norwegian Computing Center